# EUROPEAN PATENT APPLICATION

(11) **EP 4 800 441 A1**
(43) Date of publication of application: **02.09.2026**
(21) Application number: 24882213.2
(22) Date of filing: 10.10.2024
(51) Int. Cl.: G02B 5/00, G02B 5/08, H04B 10/11, G02B 5/30

(54) **OPTICAL ABSORBER, AND BEAM SPLITTER AND OPTICAL COMMUNICATION DEVICE PROVIDED WITH SAME**

(30) Priority: 27.10.2023 JP 2023185006
(71) Applicant: Tamron Co., Ltd., Saitama-shi Saitama 337-8556 (JP)
(72) Inventor: HASHIMOTO, Yusuke, Saitama-shi, Saitama 337-8556 (JP); FUSE, Shingo, Saitama-shi, Saitama 337-8556 (JP); SAKAMOTO, Takashi, Saitama-shi, Saitama 337-8556 (JP); KAWAGUCHI, Koji, Saitama-shi, Saitama 337-8556 (JP); KUNISADA, Terufusa, Saitama-shi, Saitama 337-8556 (JP); HYODO, Masamitsu, Saitama-shi, Saitama 337-8556 (JP); ABE, Keijiro, Saitama-shi, Saitama 337-8556 (JP); MENG, Lingjian, Saitama-shi, Saitama 337-8556 (JP)
(74) Representative: MFG Patentanwälte Meyer-Wildhagen Meggle-Freund Gerhard PartG mbB
(86) International application number: PCT/JP2024/036303
(87) International publication number: WO 2025/089100

(57) **Abstract**

There is provided a technology capable of removing unwanted light separated from a light beam, which is applicable to sufficient noise reduction in optical wireless communication. An optical absorber (32, 62) of an optical communication device (11, 12) includes a light-absorbing glass block (324) that absorbs incident light; a first cavity (325) that causes light transmitted through the light-absorbing glass block to undergo multiple reflection; and a second cavity (326) that causes light reflected by the light-absorbing glass block to undergo multiple reflection.

## Description

### Technical Field

The present invention relates to an optical absorber, and a beam splitter and an optical communication device including the same.

### Background Art

In the related art, with the development of the information-oriented society, high-speed communication has been required. In such high-speed communication, radio waves are used. Meanwhile, light is an electromagnetic wave but can be used without being subject to restrictions under the Radio Act. Therefore, optical wireless communication (also referred to as "free-space optical communication") has recently attracted attention, and devices for optical wireless communication have also been developed.

In optical wireless communication, it is required to remove light components that become noise from signal light. For example, in a case where spatial optical wireless communication using a laser is constructed with a coaxial optical system and signal light is separated from transmitted light or received light, there may be a case where nearly half of components of the transmitted light or the received light are emitted to the outside from the coaxial optical system. Light emitted from the optical system (hereinafter also referred to as unwanted light) may become noise with respect to the signal light. From a viewpoint of sufficiently reducing noise of the signal light, appropriate processing of such unwanted light is required.

As a technology capable of removing unwanted light separated from a light beam, a diffuser is known in which a tapered cavity is formed by a member that reflects the unwanted light, and the unwanted light is introduced into the cavity and attenuated by multiple reflection (for example, refer to Patent Literature 1). In addition, as a technology capable of removing unwanted light separated from a light beam, a technology is known in which, in a light attenuation plate used in an exposure device, an anti-reflection material containing carbon nanofibers is used on a surface of the plate (for example, refer to Patent Literature 2).

### Citation List

### Patent Literature

Patent Literature 1: JP 2005-140964 A
Patent Literature 2: WO 2010/150550 A

### Summary of the Invention

### Problems to be Solved by the Invention

In the above-described technologies in the related art, unwanted light may not be sufficiently removed in some cases. Therefore, when such technologies are applied to optical wireless communication, reduction of noise of signal light may be insufficient in some cases.

An object of one aspect of the present invention is to provide a technology capable of removing unwanted light separated from a light beam, which is applicable to sufficient noise reduction in optical wireless communication.

### Solutions to Problems

In order to solve the above problem, an optical absorber according to one aspect of the present invention includes a light-absorbing glass block that absorbs incident light; a first cavity that causes light transmitted through the light-absorbing glass block to undergo multiple reflection; and a second cavity that causes light reflected by the light-absorbing glass block to undergo multiple reflection.

In order to solve the above problem, in a beam splitter including the optical absorber according to one aspect of the present invention, the optical absorber is disposed on any of two or more optical paths branched by the beam splitter.

In order to solve the above problem, an optical communication device according to one aspect of the present invention is an optical communication device including the above-described beam splitter, in which the optical communication device branches an optical path of signal light using the beam splitter.

### Effects of the Invention

According to one aspect of the present invention, unwanted light separated from a light beam can be removed so as to be applicable to sufficient noise reduction in optical wireless communication.

### Brief Description of Drawings

Fig. 1 is a diagram schematically illustrating a configuration of an optical communication device according to a first embodiment of the present invention.
Fig. 2 is a diagram schematically illustrating a configuration of an optical absorber according to the first embodiment of the present invention.
Fig. 3 is a diagram for describing behavior of transmitted light in the optical absorber illustrated in Fig. 2.
Fig. 4 is a diagram for describing behavior of reflected light in the optical absorber illustrated in Fig. 2.
Fig. 5 is a diagram schematically illustrating a configuration for measuring back light from the optical absorber illustrated in Fig. 2.
Fig. 6 is a diagram schematically illustrating a configuration of an optical communication device according to a second embodiment of the present invention.

### Description of Embodiments

### [First Embodiment]

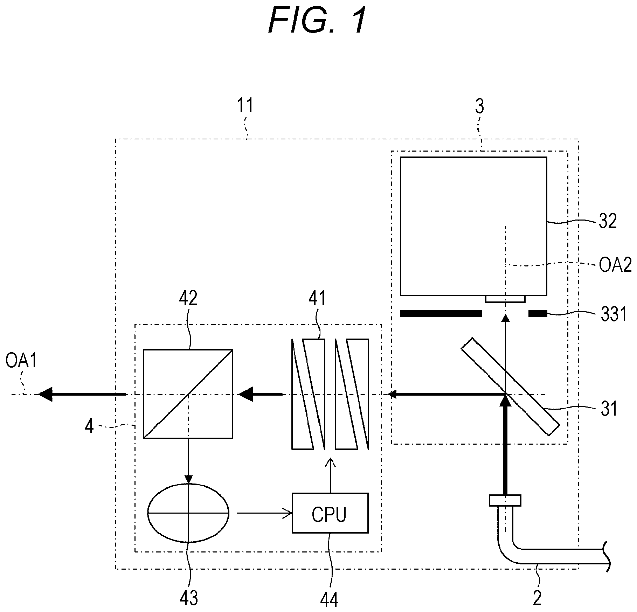

Hereinafter, an embodiment of the present invention will be described in detail. A configuration of an optical communication device according to the present embodiment will be schematically illustrated in Fig. 1.

### [Configuration of Optical Communication Device]

As illustrated in Fig. 1, an optical communication device 11 is a transmitter in optical wireless communication, and includes an optical fiber 2, a beam splitter unit 3, and an adjustment device 4. The optical communication device 11 includes the above-described configuration in, for example, a sealed housing, and the above-described configuration is appropriately disposed in the housing to constitute a coaxial optical system.

The optical fiber 2 is optically connected to a light source of signal light, and signal light from the light source is transmitted through the optical fiber 2. The optical fiber 2 is, for example, a single-mode optical fiber and includes a core and a cladding.

The beam splitter unit 3 includes a beam splitter 31 and an optical absorber 32. The optical absorber 32 includes a light-absorbing member 331.

The beam splitter 31 is an optical element that separates, from a light beam emitted from the optical fiber 2, a specific polarization component as signal light and reflects the signal light toward the adjustment device 4. The signal light propagates along an optical axis OA1. Light components other than the signal light pass through the beam splitter 31 and travel straight toward the optical absorber 32. That is, the beam splitter 31 separates an incident light beam into signal light directed in a direction perpendicular to an optical axis OA2 of the optical fiber 2 and other unwanted light that travels straight along the optical axis OA2.

The optical absorber 32 is disposed with respect to the beam splitter 31 such that the optical axis OA2 passes through a center of an entrance opening of the optical absorber 32. A distance between the optical absorber 32 and the beam splitter 31 in a direction along the optical axis OA2 is appropriately determined within a range in which substantially all of the unwanted light is introduced into the optical absorber 32. This distance is preferably as small as possible from a viewpoint of downsizing the optical communication device 11. The beam splitter 31 and the optical absorber 32 are held by a holding member such as a frame in the specific positional relationship described above. In this manner, the optical communication device 11 includes the beam splitter 31 and the optical absorber 32. In the beam splitter unit 3, the optical absorber 32 is disposed in one of two optical paths branched by the beam splitter 31, that is, an optical path of unwanted light to be attenuated. As a result, in the optical communication device 11, an optical path of signal light is branched by the beam splitter 31. A configuration of the optical absorber 32 will be described later.

The adjustment device 4 includes a wedge prism 41 that is rotatably disposed on an optical path of signal light, a branching unit 42 that is disposed on the optical path of the signal light and branches the signal light, a segmented photodiode 43 that receives light (also referred to as branch light) branched from the signal light, and a control unit 44 that controls an actuator of the wedge prism 41 such that a difference detected by the segmented photodiode 43 becomes small.

The wedge prism 41 is a set of two pairs of (four) wedge prisms. The branching unit 42 is, for example, a cube-type beam splitter, and branches signal light in a direction perpendicular to a traveling direction of the signal light. The control unit 44 is, for example, a central processing unit (CPU). The adjustment device 4 further includes an actuator that rotates the wedge prism 41. The actuator is, for example, a voice coil motor.

Each pair (two prisms) of the wedge prism 41 is rotated in mutually counter directions in association with each other, thereby controlling components in specific directions (for example, a direction of one axis and a direction of the other axis in vertical coordinates) that are perpendicular to the optical axis OA1 of the signal light after separation by the beam splitter 31. The voice coil motor has a small and lightweight configuration and rotates each wedge prism to an accurate position at high speed.

### [Configuration of Optical Absorber]

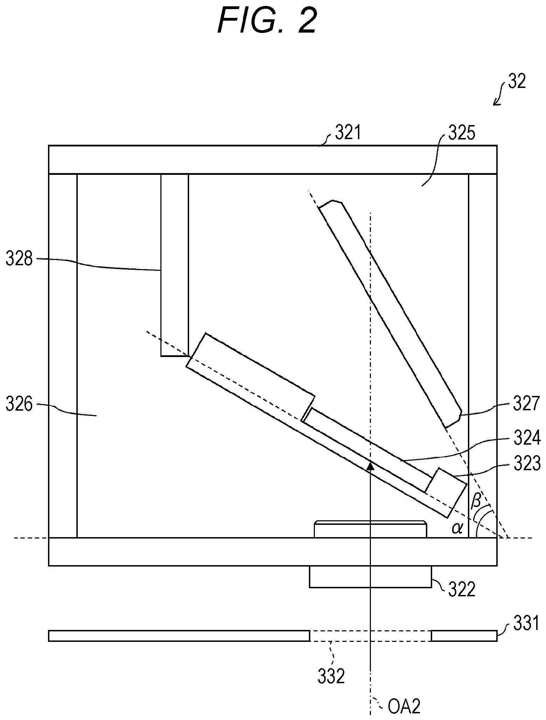

A configuration of the optical absorber 32 according to the present embodiment is schematically illustrated in Fig. 2. As illustrated in Fig. 2, the optical absorber 32 includes a housing 321 and the light-absorbing member 331.

The housing 321 is a hollow, substantially rectangular parallelepiped formed of a bottom plate, a top plate, and wall plates surrounding four sides between the bottom plate and the top plate. The housing 321 has overall heat conductivity and is formed of, for example, aluminum. An opening is provided in one wall plate of the housing 321, and an opening tubular portion 322 is disposed in the opening. The opening tubular portion 322 is a substantially cylindrical member, and therefore an opening shape of the opening tubular portion 322 is circular. An opening diameter of the opening tubular portion 322 may be an appropriate size in accordance with a beam diameter of target unwanted light. One end of the opening tubular portion 322 protrudes into the housing 321. A protrusion height of the one end of the opening tubular portion 322 from an inner surface of the wall plate of the housing 321 is, for example, a height equal to or greater than 1.1 times the opening diameter of the opening tubular portion 322.

The light-absorbing member 331 is a plate-shaped member having a circular opening 332, and at least a surface thereof on the housing 321 side is formed of a light-absorbing material. In this manner, the light-absorbing member 331 has light absorbency at least in a portion facing the housing 321. The light-absorbing member 331 may be formed of, for example, a material having light absorbency such that the entire light-absorbing member 331 has light absorbency.

The light-absorbing member 331 is disposed such that the optical axis OA2 passes through a center of the opening 332 of the light-absorbing member 331. In addition, in a direction along the optical axis OA2, the light-absorbing member 331 may not be excessively close to the opening tubular portion 322 side, and is disposed, for example, such that a distance to an outer end of the opening tubular portion 322 is approximately 2 to 4 times the opening diameter of the opening tubular portion 322. A diameter of the opening 332 of the light-absorbing member 331 can be appropriately determined from a viewpoint of blocking back light, which will be described later, from the opening tubular portion 322, and may be, for example, a diameter equal to or greater than the opening diameter of the opening tubular portion 322.

Inside the housing 321, three plate-shaped members, namely a frame plate 323, a first reflector plate 327, and a second reflector plate 328, are disposed. Each of these plate-shaped members stands vertically from a bottom plate to a top plate of the housing 321. Each of these plate-shaped members is formed of aluminum, similarly to the housing 321.

The frame plate 323 extends, in plan view, in an oblique direction from one corner of the bottom plate toward a wall plate in which the opening tubular portion 322 is disposed. The frame plate 323 has a rectangular opening, and a rectangular light-absorbing glass block 324 is fixed in the opening. The light-absorbing glass block 324 is bonded and fixed to the opening of the frame plate 323 without a gap by an adhesive having heat conductivity (for example, an adhesive in which a filler having heat conductivity is dispersed).

The light-absorbing glass block 324 is a glass member having a property of absorbing incident unwanted light. For example, the light-absorbing glass block 324 has an anti-reflection film on a surface on which the unwanted light is incident. In addition, the light-absorbing glass block 324 may be glass having an appropriate material corresponding to the signal light. For example, in a case where signal light is infrared light, the light-absorbing glass block 324 may employ glass having an absorption band in a C-band region. Examples of such a light-absorbing glass block 324 include SCHOTT (registered trademark) KG5 and ISK171, ISK167, and ISK153 manufactured by Isuzu Glass Co., Ltd.

The light-absorbing glass block 324 is disposed, in a direction along the optical axis OA2, at a position facing the opening tubular portion 322. The light-absorbing glass block 324 is disposed parallel to the frame plate 323, and therefore the light-absorbing glass block 324 is also disposed obliquely with respect to the optical axis OA2. In this manner, an incident surface (incident-side surface) of the light-absorbing glass block 324 extends obliquely with respect to the optical axis OA2 of incident light. An angle α formed between the incident-side surface of the light-absorbing glass block 324 and a wall plate having an opening portion is, for example, 30°.

When an incident direction of unwanted light to the light-absorbing glass block 324 is used as a reference, the frame plate 323 partitions an interior of the housing 321 into a space in front of the light-absorbing glass block 324 and a space behind the light-absorbing glass block 324. The front space is a space into which reflected light is emitted when unwanted light is incident on the light-absorbing glass block 324, and the rear space is a space into which transmitted light is emitted when unwanted light is incident on the light-absorbing glass block 324. In the interior space of the housing 321, a space behind the light-absorbing glass block 324 into which the transmitted light is emitted is also referred to as a "first cavity" (reference sign 325), and a space in front of the light-absorbing glass block 324 into which the reflected light is emitted is also referred to as a "second cavity" (reference sign 326).

The first reflector plate 327 is a plate-shaped member that reflects light transmitted through the light-absorbing glass block 324 and is disposed in the first cavity 325. The first reflector plate 327 is disposed, in a direction along the optical axis OA2, at a position facing the light-absorbing glass block 324. In addition, in plan view, the first reflector plate 327 extends in an oblique direction with respect to a wall plate in which the opening tubular portion 322 is disposed, and extends in a further oblique direction with respect to the frame plate 323. An angle β formed between the first reflector plate 327 and the frame plate 323 is, for example, 30°. Accordingly, an angle (α+β) formed between an incident-side surface of the first reflector plate 327 and the wall plate in which the opening tubular portion 322 is disposed is, for example, 60°. In this manner, an incident-side surface of the first reflector plate 327 extends obliquely with respect to the optical axis OA2 of light incident on the light-absorbing glass block 324.

The second reflector plate 328 is a plate-shaped member that reflects light reflected by the light-absorbing glass block 324. In plan view, the second reflector plate 328 extends in a direction along the optical axis OA2 and is connected to an end of the frame plate 323 and to a rear wall plate of the housing 321. That is, the second reflector plate 328, together with the frame plate 323, divides an interior space of the housing 321 into two parts. In this manner, the first cavity 325 and the second cavity 326 are separated by the second reflector plate 328. In the second cavity 326, no surface parallel to the surface of the light-absorbing glass block 324 exists, and planar surfaces of inner surfaces of the second cavity 326 are all oblique with respect to the surface of the light-absorbing glass block 324.

In addition, surfaces inside the housing 321 other than the light-absorbing glass block 324 are covered with a light-absorbing layer having light absorbency with respect to both transmitted light and reflected light from the light-absorbing glass block 324. A reflectance of unwanted light at inner surfaces of the housing 321 is preferably low from a viewpoint of suppressing return of unwanted light (emission from the optical absorber 32 to the outside), and is preferably, for example, 1% or less. Examples of the light-absorbing layer include a sheetshaped light-absorbing material attached to the inner surfaces and a coating film of a light-absorbing component. In addition, the light-absorbing material or the light-absorbing component can be appropriately determined in accordance with a type of a light beam (signal light). For example, in a case where light beam is infrared light, a material that absorbs near-infrared light may be employed as the light-absorbing material or the light-absorbing component.

### [Attenuation of Unwanted Light in Optical Absorber]

Unwanted light that has passed through the opening tubular portion 322 reaches the light-absorbing glass block 324, a part thereof is absorbed by the light-absorbing glass block 324, a part thereof is transmitted through the light-absorbing glass block 324, and a part thereof is reflected by the light-absorbing glass block 324. The light-absorbing glass block 324 absorbs a part of the unwanted light and attenuates the unwanted light by converting the absorbed part into heat. Hereinafter, a component of the unwanted light transmitted through the light-absorbing glass block 324 is also referred to as "unwanted transmitted light", and a component of the unwanted light reflected by the light-absorbing glass block 324 is also referred to as "unwanted reflected light".

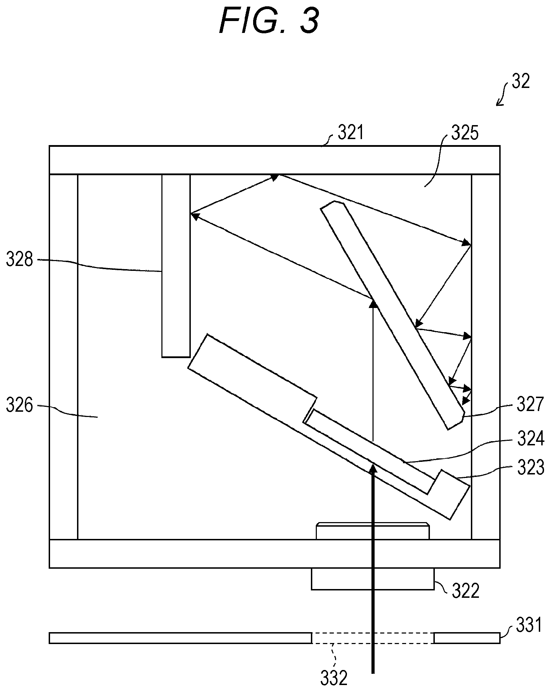

Behavior of unwanted transmitted light in the optical absorber 32 illustrated in Fig. 2 will be described with reference to Fig. 3. In the drawing, a traveling direction at a beam center of unwanted (transmitted) light is indicated by arrows. For example, as illustrated in Fig. 3, the unwanted transmitted light is reflected by the surface of the first reflector plate 327, is then reflected by the second reflector plate 328, is reflected by the rear wall plate of the housing 321, and is repeatedly reflected in a tapered cavity portion formed between the side wall plate of the housing and the back surface of the first reflector plate 327. In this manner, in the first cavity 325, light transmitted through the light-absorbing glass block 324 undergoes multiple reflection.

In the present specification, "multiple reflection" means that light is reflected two or more times at different surfaces, and means that, when a traveling direction at a beam center of light is represented by an arrow, the arrow sequentially reaches two or more portions of inner surfaces of the housing 321.

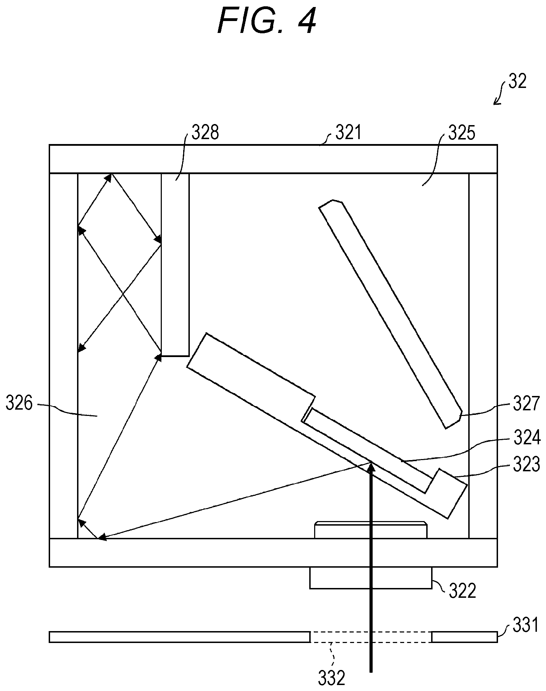

Behavior of unwanted reflected light in the optical absorber 32 illustrated in Fig. 2 will be described with reference to Fig. 4. In the drawing, arrows indicate a traveling direction at a beam center of unwanted (reflected) light. For example, as illustrated in Fig. 4, the unwanted reflected light is reflected multiple times at the surfaces of the front, side, and rear wall plates of the housing 321 and at the surface of the second reflector plate 328. In this manner, also in the second cavity 326, light reflected by the light-absorbing glass block 324 undergoes multiple reflection.

As described above, surfaces inside the housing 321 other than the light-absorbing glass block 324 are covered with the light-absorbing layer. Therefore, both the unwanted transmitted light and the unwanted reflected light are partially absorbed by the light-absorbing layer and converted into heat each time they are reflected, and are attenuated. In this manner, in both the first cavity 325 and the second cavity 326, unwanted light is attenuated each time it is reflected.

In addition, the opening tubular portion 322 partially protrudes into the housing 321. Therefore, even in a case where unwanted reflected light is reflected toward the opening tubular portion 322 during multiple reflection in the second cavity 326, an outer peripheral surface of the opening tubular portion 322 attenuates the unwanted reflected light and reflects the unwanted reflected light toward the interior of the second cavity 326.

In this manner, unwanted light that has reached the interior of the optical absorber 32 is first absorbed by the light-absorbing glass block 324 and attenuated, the unwanted transmitted light undergoes multiple reflection in the first cavity 325, the unwanted reflected light undergoes multiple reflection in the second cavity 326, and each of the unwanted transmitted light and the unwanted reflected light is attenuated each time it is reflected. Therefore, unwanted light introduced into the interior of the optical absorber 32 is substantially attenuated and extinguished.

A part of the unwanted light may be emitted to the outside from the housing 321 through the opening tubular portion 322 due to multiple reflection. In a case where such emitted unwanted light is blocked by the light-absorbing member 331, the emitted unwanted light is absorbed by the light-absorbing member 331. Therefore, unwanted light (hereinafter also referred to as "back light") returning from the interior of the optical absorber 32 to the outside is extremely small and can be substantially ignored as noise in optical wireless communication.

### [Major Operation and Advantageous Effects]

In the present embodiment, the optical absorber 32 includes the light-absorbing glass block 324 disposed on an optical path of incident unwanted light, the first cavity 325 disposed behind the light-absorbing glass block 324 to cause transmitted light through the light-absorbing glass block 324 to undergo multiple reflection, and the second cavity 326 disposed in front of the light-absorbing glass block 324 to cause reflected light at the light-absorbing glass block 324 to undergo multiple reflection. Accordingly, in optical communication, for example, optical communication using infrared light, the optical absorber 32 can serve as a high-performance optical attenuator in which substantially no light leakage that affects optical communication occurs.

In the present embodiment, the light-absorbing glass block 324 is disposed such that the surface thereof is inclined with respect to an optical axis of incident unwanted light. More specifically, in the present embodiment, the light-absorbing glass block 324 is obliquely mounted such that the surface thereof forms an angle of 30° with respect to the optical axis. Therefore, reflected light among unwanted light that has reached the light-absorbing glass block 324 is easily introduced into the second cavity 326 and is likely to undergo multiple reflection in the second cavity 326.

In the present embodiment, the first reflector plate 327 is further disposed behind the light-absorbing glass block 324. Since the first reflector plate 327 is disposed obliquely with respect to the optical axis OA2, reflection of unwanted transmitted light toward the opening tubular portion 322 does not occur. Accordingly, this configuration is advantageous from a viewpoint of suppressing generation of back light. The first reflector plate 327 is disposed in a further oblique manner with respect to the light-absorbing glass block 324. Accordingly, this configuration is advantageous from a viewpoint of introducing unwanted transmitted light further into the first cavity 325 and promoting multiple reflection.

In the present embodiment, the first cavity 325 and the second cavity 326 are separated by the second reflector plate 328. Accordingly, unwanted transmitted light undergoing multiple reflection in the first cavity 325 does not reach the second cavity 326, and unwanted reflected light undergoing multiple reflection in the second cavity 326 does not reach the first cavity 325. In this manner, circulation of unwanted light between the cavities is prevented, and thus generation of unintended emission of unwanted light (back light) is further suppressed. Therefore, this configuration is more advantageous from a viewpoint of reliably attenuating each unwanted light in each cavity and is also advantageous from a viewpoint of suppressing generation of back light.

The optical absorber 32 has a two-stage structure including the housing 321 that absorbs unwanted light and causes multiple reflection to attenuate the unwanted light, and the light-absorbing member 331 that absorbs back light from the housing 321. Accordingly, a small amount of back light from the housing 321 is absorbed by the light-absorbing member 331 and is attenuated.

In addition, in the present embodiment, inner surfaces of the housing 321 are formed of a light-absorbing layer. Accordingly, unwanted light is absorbed and attenuated at each reflection by multiple reflection in the first cavity 325 or the second cavity 326. In this manner, in the optical absorber of the present embodiment, unwanted light is repeatedly reflected by walls provided with anti-reflection treatment and attenuated each reflection, and thus generation of back light is further suppressed.

In addition, in the present embodiment, the housing 321, the first reflector plate 327, the second reflector plate 328, and the frame plate 323 are all formed of aluminum. In addition, the light-absorbing glass block 324 is fixed to the frame plate via an adhesive having heat conductivity. Therefore, heat generated by absorption of unwanted light is transferred through these aluminum members and the adhesive, and can be dissipated from the housing 321 by radiative heat dissipation (blackbody radiation). Accordingly, local overheating of the housing 321 is prevented, and appropriate heat dissipation from the housing 321 can be achieved. In particular, since heat is transferred between members that are in direct contact with each other, prevention of such local overheating and appropriate heat dissipation as described above can be expected even in a vacuum environment.

In the present embodiment, in the first cavity 325, a light guide path is formed between the first reflector plate 327 and the side wall of the housing 321 such that a distance between the wall surfaces facing each other gradually decreases. Therefore, unwanted light introduced into the light guide path by multiple reflection undergoes multiple reflection in the light guide path and is easily attenuated and extinguished (converted into heat) in the light guide path.

The optical absorber 32 of the present embodiment can attenuate incident unwanted light and substantially extinguish the unwanted light with a simple configuration including the housing 321, which has a simple configuration as a rectangular shape in plan view, the frame plate 323 for fixing the light-absorbing glass block 324, and two reflector plates 327 and 328. Various configurations are possible, including a shape of the housing, for causing multiple reflection of unwanted light in each cavity of the first cavity 325 disposed behind the light-absorbing glass block 324 and the second cavity 326 disposed in front of the light-absorbing glass block 324. The present embodiment is one example of the present invention, and it is apparent from the above description that the present invention can include such a large number of configurations.

### [Verification Experiment Example]

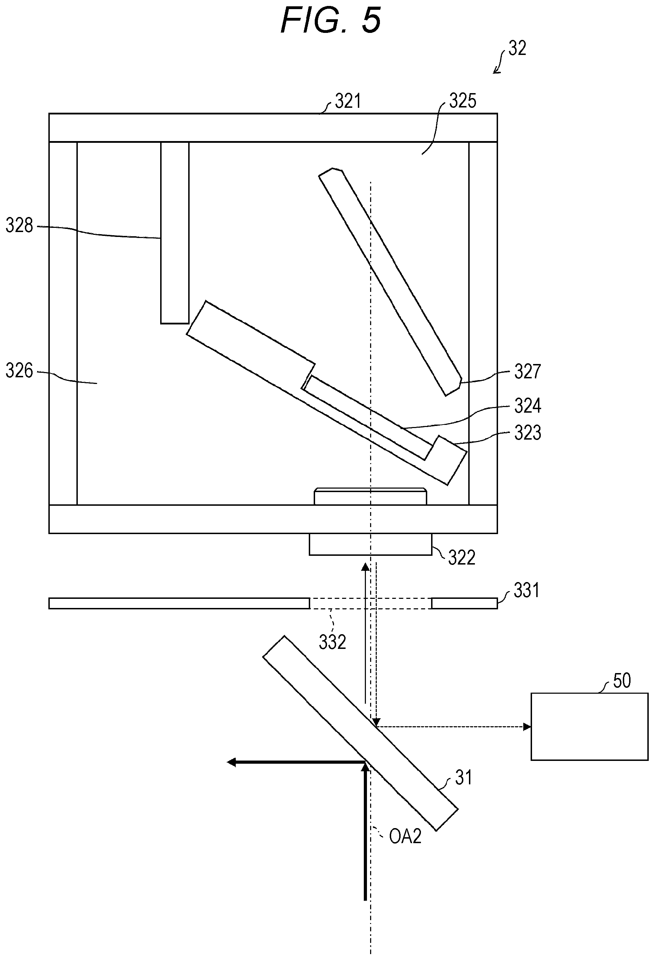

Unwanted light incident on an optical absorber and back light from the optical absorber were measured using a power meter, and a degree of attenuation of back light by the optical absorber was measured. As the optical absorber, the optical absorber of the present embodiment as illustrated in Fig. 2 was used, and a commercially available optical diffuser was used as a comparative example. The commercially available optical diffuser has a mechanism that attenuates introduced light by reflecting the introduced light. Fig. 5 is a diagram schematically illustrating a configuration for measuring back light from the optical absorber illustrated in Fig. 2.

An intensity of unwanted light incident on the optical absorber is measured by disposing, in place of the optical absorber 32, a power meter 50 on an optical axis of the unwanted light, and back light from the optical absorber is measured by disposing the power meter 50 on an optical path of the back light reflected by the beam splitter 31.

As a result, attenuation of unwanted light of -70 dB was confirmed in the optical absorber of the present embodiment. In contrast, attenuation of unwanted light in the above-described commercially available optical diffuser was -45 dB. In this manner, the optical absorber of the present embodiment provides a higher optical attenuation effect than the commercially available optical diffuser that attenuates light only by reflection.

In this manner, the optical absorber 32 of the present embodiment is configured as a closed space, can be constructed in a limited space, and can substantially prevent generation of back light. Therefore, back light of unwanted light can be attenuated to -70 dB or less. Accordingly, in an optical communication device including the optical absorber 32 of the present embodiment, signal light that is substantially free of noise can be transmitted and received, and stable optical communication can be achieved.

### [Second Embodiment]

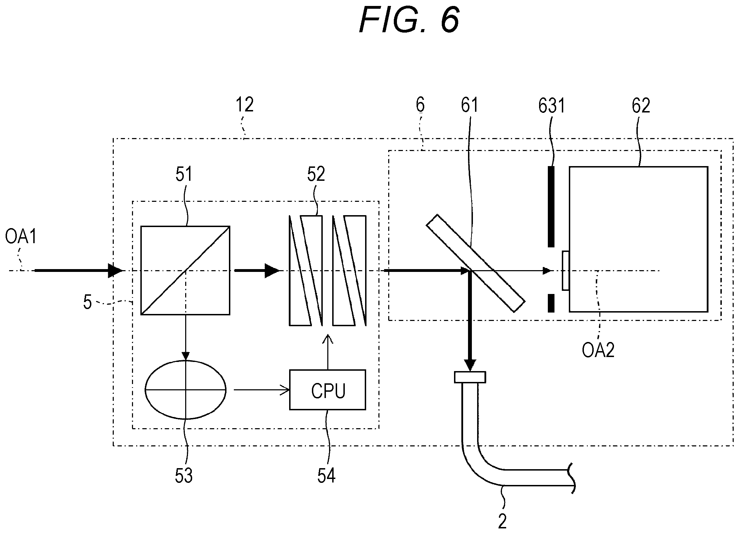

Another embodiment of the present invention will be described below. For convenience of description, members having the same functions as those described in the above embodiment are denoted by the same reference numerals, and repeated description thereof will be omitted. Fig. 6 is a diagram schematically illustrating a configuration of an optical communication device according to a second embodiment of the present invention. An optical communication device 12 illustrated in Fig. 6 is a receiver in optical wireless communication. The optical communication device 12 is basically configured similarly to the above-described optical communication device 11, except that the optical communication device 12 is configured to receive a light beam.

The optical communication device 12 includes an adjustment device 5, a beam splitter unit 6, and the optical fiber 2.

The adjustment device 5 includes a branching unit 51, a wedge prism 52, a segmented photodiode 53, and a control unit 54, and is similar to the adjustment device 4 of the first embodiment except that a light beam is transmitted from the branching unit 51.

The beam splitter unit 6 includes a beam splitter 61 and an optical absorber 62, and the optical absorber 62 includes a light-absorbing member 631. The beam splitter 61 separates a light beam into signal light and unwanted light, reflects the signal light toward the optical fiber 2, and allows the unwanted light to travel straight. The optical absorber 62 is disposed on the optical axis OA2 of the unwanted light that travels straight.

The optical fiber 2 is disposed at a position for receiving the signal light from the beam splitter 61.

Also in the optical communication device 12, unwanted light other than signal light is attenuated by the optical absorber 62 and is substantially extinguished. Also in the optical communication device 12, back light from the optical absorber 62 can be attenuated to -70 dB or less. In this manner, also in a receiving device in optical wireless communication, the optical absorber 62 of the present embodiment can sufficiently remove noise of signal light so as to enable stable optical communication.

### [Modifications]

In the present invention, the optical absorber and the beam splitter may not be integrally formed. For example, the optical absorber and the beam splitter may be individually and directly fixed to a casing of an optical communication device so as to have a specific desired positional relationship.

In the present invention, in a case where the beam splitter separates a light beam into signal light and two or more beams of unwanted light, two or more optical absorbers may be disposed with respect to the beam splitter in accordance with the separated unwanted light.

In the present invention, a shape of the housing of the optical absorber can be appropriately determined within a range in which unwanted light can be caused to undergo multiple reflection in each of the first cavity and the second cavity. For example, a shape of an interior of the housing in plan view may be a polygon other than a quadrilateral.

In addition, a shape of the light-absorbing glass block in plan view may not be a quadrilateral as long as unwanted light can be absorbed. For example, the shape of the light-absorbing glass block in plan view may be circular or annular. Such a circular or annular light-absorbing glass block is preferable from a viewpoint of uniformity of heat in the light-absorbing glass block and from a viewpoint of weight reduction due to a reduced surplus portion with respect to an incident beam diameter. In addition, a light-absorbing glass block having a quadrilateral shape in plan view is preferable from a viewpoint of being relatively inexpensive and from a viewpoint of improving heat dissipation from the light-absorbing glass block due to a larger contact area with the frame plate.

In addition, at least one of opposing principal surfaces of the light-absorbing glass block may be roughened, such as ground glass (or frosted glass). The light-absorbing glass block may not be a single piece and may be two or more pieces. In a case where a plurality of light-absorbing glass blocks are employed, an arrangement of each of the light-absorbing glass blocks may be devised so as to enable attenuation by absorption or reflection.

In the present invention, the optical absorber may further include a cooling structure for suppressing heat generation due to absorption of unwanted light. Examples of the cooling structure include a heat dissipation fin structure, an air-cooling fan, a water-cooling structure, and a heat pipe. Since a heat pipe has a compact structure and is less dependent on the environment, the heat pipe is suitable as a cooling structure for an optical absorber mounted in an optical communication device in an artificial satellite.

In the present invention, the first cavity and the second cavity may communicate with each other. When these cavities communicate with each other, the second cavity or the first cavity can be further utilized for attenuation of transmitted light or reflected light.

In the present invention, within a range in which unwanted light is caused to undergo multiple reflection in the first cavity, transmitted light of the light-absorbing glass block may be reflected by the surface of the wall plate of the first cavity. In this case, it is preferable that the wall surface is an oblique surface with respect to the optical axis OA2 of the unwanted light. Both of the first reflector plate described above and reflection at the wall surface described above are one aspect of a reflection surface that reflects transmitted light of the light-absorbing glass block in the first cavity.

In the present invention, an arrangement of reflector plates is not limited to the above-described embodiments. For example, the above-described second reflector plate may be disposed obliquely with respect to the optical axis OA2 to form a tapered cavity portion also in the second cavity. Such a configuration is expected to have an effect of further attenuating unwanted light in the second cavity.

The optical absorber and the beam splitter according to the present invention are applicable not only to optical communication devices but also to various optical apparatuses in which unwanted light can become noise, and effects similar to those of the present embodiment can be achieved also in such optical apparatuses.

### [Summary]

Although radio-wave-based communication technologies such as 5G have achieved dramatic increases in speed, it can be said that the communication speed has reached a theoretical upper limit. Further increases in communication speed may be achieved by increasing the number of bands and increasing frequency. However, radio-wave bands are internationally congested, and it is difficult to increase the number of bands. In addition, when the frequency is increased, straightness of propagation increases, and diffraction, which is an advantage of radio waves, may become ineffective.

In 5G, straightness of propagation increases as a trade-off for higher speed, and since radio waves do not diffract around obstacles inside buildings or in the shade of buildings, it becomes difficult to ensure communication quality. Therefore, it is necessary to install a large number of base stations. Relaying from base stations is also difficult for the same reasons. Further, even when cables are laid, there are difficulties such as an increase in construction costs due to the large number of base stations and issues relating to cable routing.

In contrast, optical communication has high straightness of propagation but does not propagate in a wide range like radio waves. Therefore, optical communication is advantageous in terms of security. Although optical communication from moving objects is difficult at the present stage, optical communication is considered suitable for connections from fixed base stations to relay points. In addition, optical communication is considered advantageous as a technology that complements radio waves also in communication in outer space between artificial satellites. Therefore, with increasing speed and longer transmission distance of optical wireless communication, more precise optical technologies are considered to be required.

According to the above-described embodiments, attenuation of unwanted light applicable to optical communication can be achieved. The present invention that provides such effects is expected to contribute to achievement of, for example, Sustainable Development Goals (SDGs) advocated by the United Nations, including Goal 9 "Build resilient infrastructure, promote inclusive and sustainable industrialization and foster innovation".

A first aspect of the present invention is an optical absorber (32) including: a light-absorbing glass block that absorbs incident light; a first cavity (325) in which light transmitted through the light-absorbing glass block (324) is multiply reflected; and a second cavity (326) in which light reflected by the light-absorbing glass block is multiply reflected. According to a first aspect, it is possible to provide a technology capable of removing unwanted light separated from a light beam, which is applicable to sufficient noise reduction in optical wireless communication.

In a second aspect of the present invention, according to the first aspect, an incident surface of the light-absorbing glass block extends obliquely with respect to an optical axis of incident light. The second aspect is more effective from a viewpoint of promoting attenuation due to multiple reflection of unwanted light.

In a third aspect of the present invention, according to the first or second aspect, the first cavity includes a reflection surface (first reflector plate 327) that reflects light transmitted through the light-absorbing glass block, and the reflection surface extends obliquely with respect to an optical axis of light incident on the light-absorbing glass block. The third aspect is more effective from a viewpoint of promoting attenuation due to multiple reflection of unwanted light in the first cavity.

In a fourth aspect of the present invention, according to any one of the first to third aspects, the first cavity and the second cavity that communicate with each other are partitioned by a reflector plate (second reflector plate 328) that reflects light transmitted through the light-absorbing glass block and light reflected by the light-absorbing glass block. The fourth aspect is more effective from a viewpoint of preventing circulation of unwanted light between the first cavity and the second cavity.

In a fifth aspect of the present invention, according to any one of the first to third aspects, inner surfaces of the first cavity and the second cavity are covered with a light-absorbing layer that absorbs light transmitted through the light-absorbing glass block and light reflected by the light-absorbing glass block. The fifth aspect is more effective from a viewpoint of promoting attenuation of unwanted light by anti-reflection.

A sixth aspect of the present invention is a beam splitter (31) including the optical absorber according to any one of the first to fifth aspects, in which the optical absorber is disposed on any of two or more optical paths branched by the beam splitter. According to a sixth aspect, similarly to the first aspect, it is possible to provide a technology capable of removing unwanted light separated from a light beam, which is applicable to sufficient noise reduction in optical wireless communication.

A seventh aspect of the present invention is an optical communication device (11) including the beam splitter according to the sixth aspect, in which the optical communication device branches an optical path of signal light using the beam splitter. According to the seventh aspect, in optical wireless communication, unwanted light that is separated from a light beam and becomes noise can be sufficiently removed.

The present invention is not limited to the above-described embodiments, and thus various modifications can be made within the scope of the claims. Embodiments obtained by combining as appropriate the respective technical means disclosed in different embodiments are to be included in the technical scope of the present invention.

### Reference Signs List

- 11, 12: optical communication device
- 2: optical fiber
- 3, 6: beam splitter unit
- 4, 5: adjustment device
- 31, 61: beam splitter
- 32, 62: optical absorber
- 331, 631: light-absorbing member
- 41, 52: wedge prism
- 42, 51: branching unit
- 43, 53: segmented photodiode
- 44, 54: control unit
- 50: power meter
- 321: housing
- 322: opening tubular portion
- 323: 323
- 324: light-absorbing glass block
- 325: first cavity
- 326: second cavity
- 327: first reflector plate (reflection surface)
- 328: second reflector plate (reflector plate)
- 332: opening
- OA1, OA2: optical axis

## Claims

1. An optical absorber (32, 62) comprising: a light-absorbing glass block (324) that absorbs incident light; a first cavity (325) that causes light transmitted through the light-absorbing glass block to undergo multiple reflection; and a second cavity (326) that causes light reflected by the light-absorbing glass block to undergo multiple reflection.

2. The optical absorber (32, 62) according to claim 1, wherein an incident surface of the light-absorbing glass block (324) extends obliquely with respect to an optical axis (OA2) of incident light.

3. The optical absorber (32, 62) according to claim 1,
wherein the first cavity (325) includes a reflection surface (327) that reflects light transmitted through the light-absorbing glass block, and
the reflection surface extends obliquely with respect to an optical axis (OA2) of light incident on the light-absorbing glass block.

4. The optical absorber (32, 62) according to claim 1, wherein the first cavity (325) and the second cavity (326) that communicate with each other are partitioned by a reflector plate (328) that reflects light transmitted through the light-absorbing glass block and light reflected by the light-absorbing glass block.

5. The optical absorber (32, 62) according to claim 1, wherein inner surfaces of the first cavity (325) and the second cavity (326) are covered with a light-absorbing layer that absorbs light transmitted through the light-absorbing glass block (324) and light reflected by the light-absorbing glass block (324).

6. A beam splitter unit (3, 6) comprising: the optical absorber (32, 62) according to any one of claims 1 to 5, wherein the optical absorber is disposed on any of two or more optical paths branched by a beam splitter (31,61) of the beam splitter unit (3,6).

7. An optical communication device (11,12) comprising:
the beam splitter unit (3, 6) according to claim 6,
wherein the optical communication device (11,12) branches an optical path of signal light using the beam splitter (31, 61).
